# EUROPÄISCHE PATENTSCHRIFT

(11) **EP 2 187 078 B1**
(45) Veröffentlichungstag und Bekanntmachung des Hinweises auf die Patenterteilung: **09.05.2012**
(21) Anmeldenummer: 10155239.6
(22) Anmeldetag: 14.07.2006
(51) Int. Cl.: F16D 55/22, F16D 65/18

(54) **Scheibenbremse für Fahrzeuge sowie Schutzscheibe zur Verwendung in einer Scheibenbremse**
Disc brake for vehicles and protecting cover for a disc brake
Frein à disque pour véhicules et couverture protectrice pour un frein à disque

(30) Priorität: 29.07.2005 DE 102005035583
(43) Veröffentlichungstag der Anmeldung: 19.05.2010
(62) Teilanmeldung aus: 06014636.2
(73) Patentinhaber: BPW Bergische Achsen KG, 51674 Wiehl (DE)
(72) Erfinder: Abt, Christian, 51643, Gummersbach (DE); Klaas, Thomas, 51580, Reichshof (DE); Pehle, Michael, 51371, Leverkusen (DE); Dowe, Günter, 51588, Nümbrecht (DE)
(74) Vertreter: Christophersen & Partner

(56) Entgegenhaltungen:
- EP-A- 1 441 142
- WO-A-01/75324
- WO-A-2004/102023
- GB-A- 2 008 205

## Beschreibung

Die Erfindung betrifft eine Scheibenbremse für Fahrzeuge, mit einem eine Bremsscheibe übergreifenden Bremssattel, in dessen gegenüber äußeren Verunreinigungen abgedichtetem Bremssattelgehäuse ein den Bremsbelag der Scheibenbremse beaufschlagendes Kraftübertragungselement verschiebbar aufgenommen ist, wobei ein Dichtelement mit einem ersten Endbereich gegenüber dem Bremssattelgehäuse und mit einem zweiten Endbereich gegenüber dem Kraftübertragungselement festgelegt ist, das Dichtelement einen axial stauchbaren mittleren Bereich aufweist, der als Faltenbalg ausgebildet ist, und eine Schutzscheibe das Kraftübertragungselement ringförmig umgibt und mit ihrem Außenrand an dem Bremssattelgehäuse festgelegt ist.

Die Erfindung betrifft ferner eine Schutzscheibe zur Verwendung in einer Scheibenbremse nach dem Oberbegriff des Patentanspruchs 9.

Bei Scheibenbremsen ist ein als Druckstempel ausgebildetes Kraftübertragungselement in axialer Richtung der Bremsscheibe verschiebbar aus dem Bremssattelgehäuse heraus geführt. Bei jeder Betätigung der Bremse wird der Druckstempel über eine Zuspanneinrichtung in Richtung der Bremsscheibe axial zugestellt, und nach Beendigung des Bremsvorgangs in entgegengesetzter Richtung bewegt. In der Regel ist eine Nachstelleinrichtung vorhanden, um im Fahrbetrieb ein bestimmtes Spaltmaß zwischen Bremsbelag und Bremsscheibe einzuhalten. Da im Gehäuse der Scheibenbremse schmutz- und feuchtigkeitsempfindliche Bauteile, wie z.B. die Nachstelleinrichtung oder Komponenten der Zuspanneinrichtung, untergebracht sind, ist das Gehäuse mit Hilfe eines Dichtelements, welches zum Ausgleich der Axialbewegungen des Druckstempels gegenüber dem Bremssattelgehäuse axial stark verformbar gestaltet ist, vor Schmutz und Feuchtigkeit abgeschirmt.

Als Dichtelement dienen häufig faltenbalgähnliche Gummimanschetten, die mit ihrem einen Ende am Bremssattelgehäuse, und mit ihrem anderen Ende im vorderen, d.h. bremsscheibenzugewandten Bereich des Druckstempels befestigt sind und auf diese Weise das Innere des Bremssattelgehäuses gegenüber Verunreinigungen schützen. Mit bei zunehmendem Bremsverschleiß stärkerer Zustellung des Druckstempels vergrößert sich der Abstand zwischen dessen vorderem Ende und dem Gehäuse, so dass auch der mittlere Bereich des balgförmigen Dichtelements eine entsprechende Streckung nach außen erfährt, d. h. in den Raum zwischen Gehäuse und Bremsscheibe wandert.

Derartige, z. B. aus der gattungsbildenden WO 2004/102023 A1, der GB 2 008 205 A1, der WO 01/75324 A1, der DE 103 31 929 B3 oder der EP 0 565 997 A1 bekannte Dichtelemente haben sich dann als schadensanfällig herausgestellt, wenn der weit vorne am Druckstempel befestigte Endbereich des Dichtelements sich sehr nah an der Bremsscheibe bzw. dem Bremsbelag befindet, wo während des Bremsvorganges hohe Temperaturen auftreten. Die elastische oder, wie bei der GB 2 008 205 A, aus verschiebbaren Segmenten zusammengesetzte Dichtung besteht üblicherweise aus einem nicht sehr temperaturbeständigen Material. Für die Lebensdauer des Dichtelements ebenfalls nachteilig ist, wenn dieses mit zunehmendem Bremsverschleiß immer weiter in den Raum zwischen Bremssattelgehäuse und Bremsscheibe expandiert, wo es offen liegt und den im Fahrbetrieb teilweise erheblichen Belastungen, wie etwa Spritzwasser, Grobstaub und Steinschlägen ausgesetzt ist. Auch dies hat sich für die Schadensanfälligkeit und die Lebensdauer der Dichtelemente als nachteilig erwiesen.

Um eine langlebigere Abdichtung des Inneren des Bremssattelgehäuses zu erreichen, ist es aus der EP 1 441 142 A1 bekannt, zusätzlich zu einem Dichtelement der herkömmlichen Art ein zweites Dichtelement hinter diesem anzuordnen. Das zweite Dichtelement ist mit einem ersten Endbereich gegenüber dem Bremssattelgehäuse und mit einem zweiten Endbereich am bremsscheibenabgewandten Ende des Druckstempels festgelegt. Es soll für den Fall, dass das erste Dichtelement eine Beschädigung erleidet, weiterhin Schutz bieten. Als nachteilig bei dieser zweistufigen Dichtung hat sich neben deren vergleichsweise aufwendigem Aufbau erwiesen, dass der mittlere Bereich des zweiten Dichtelements mit zunehmendem Bremsverschleiß bzw. größer werdender Zustellung des Druckstempels eine Schlaufe bildet, die unter Annäherung an die häufig hohe Temperaturen aufweisenden Bremsbeläge bzw. die Bremsscheibe in den Raum zwischen Bremssattelgehäuse und Bremsscheibe eintritt und bei Ausfall des ersten Dichtelements ebenfalls den dortigen äußeren Belastungen ausgesetzt ist. Daher vermag das zweite Dichtelement die Lebensdauer der Dichtung nicht nachhaltig zu erhöhen.

Der Erfindung liegt die **Aufgabe** zugrunde, die durch äußere Einflüsse hervorgerufene Schadensanfälligkeit der zwischen dem Gehäuse der Scheibenbremse und dem darin verschiebbar angeordneten Kraftübertragungselement, z. B. Druckstempel, vorgesehenen Abdichtung zu verringern.

Zur **Lösung** ist eine Scheibenbremse für Fahrzeuge mit den eingangs angegebenen Merkmalen gekennzeichnet durch eine derart zwischen dem Bremsbelag und dem

Dichtelement angeordnete Schutzscheibe, dass sich das ganze Dichtelement hinter der Schutzscheibe befindet.

Im Hinblick auf die Schutzfunktion der Scheibe, auch Strahlungshitze von dem dahinter angeordneten Dichtelement abzuhalten, sollte die Schutzscheibe entweder aus Metall, oder aber aus einem thermisch belastbaren Kunststoff bestehen.

Eine Ausgestaltung sieht vor, dass die Schutzscheibe an ihrem Innenrand mit mindestens einer Führungsfläche zur Führung des Kraftübertragungselements versehen ist. Diese Führungsfläche ermöglicht eine reibungsarme und zuverlässige Führung des Kraftübertragungselements bzw. Druckstempels, und dies auf konstruktiv einfache Weise. Insofern dient die Schutzscheibe nicht nur dazu, die durch äußere Einflüsse hervorgerufene Schadensanfälligkeit der Abdichtung zu verringern, sondern sie übernimmt zusätzlich die Funktion eines Führungselementes für das jeweilige Kraftübertragungselement bzw. den jeweiligen Druckstempel.

Im Rahmen der Wartung oder Reparatur der Scheibenbremse ist es von Vorteil, wenn die zwischen dem Bremsbelag und dem Dichtelement angeordnete Schutzscheibe aus zwei sich zu einer Ringform ergänzenden Teilscheiben zusammengesetzt ist. Dies vereinfacht zudem die Montage und Demontage der Scheibenbremse.

Vorzugsweise sind die beiden Teilscheiben durch Formschlusselemente lösbar miteinander verbunden, wobei diese Formschlusselemente vorzugsweise in axialer Richtung voneinander trennbar gestaltet sind.

Eine weitere Ausgestaltung sieht vor, dass die Schutzscheibe mit über ihren Umfang verteilten Durchtrittsöffnungen versehen ist. Durch diese Öffnungen kann z. B. Feuchtigkeit aus dem Zwischenraum zwischen Kraftübertragungselement und Dichtelement austreten. Die Größe der Durchtrittsöffnungen ist dabei so zu wählen, dass gröbere Verunreinigungen, z. B. kleine Steine, in diesen Zwischenraum nicht eintreten, zugleich aber Feuchtigkeit und Staub zuverlässig austreten können, so dass sich in dem Zwischenraum keine groben Verunreinigungen bzw. Feuchte ansammeln kann.

Zur **Lösung** der oben genannten Aufgabe wird ferner eine Schutzscheibe zur Verwendung in einer Scheibenbremse mit den in Patentanspruch 9 angegebenen Merkmalen vorgeschlagen. Indem die Schutzscheibe ringförmig mit einer zentralen Öffnung für das Kraftübertragungselement und einem an dem Bremssattelgehäuse festlegbaren Außenrand gestaltet ist, wobei die Schutzscheibe mit über ihren Umfang verteilten Durchtrittsöffnungen versehen ist, wird ein ebenso einfacher wie wirkungsvoller Schutz der Abdichtung gegenüber äußeren Einflüssen wie Steinschlag und anderem Grobschmutz, oder gegenüber direkter Strahlungshitze erreicht. Vorteilhafte Ausgestaltungen einer solchen Schutzscheibe sind in einigen Unteransprüchen angegeben.

Weitere Vorteile und Einzelheiten der Erfindung werden nachfolgend unter Bezugnahme auf die beigefügten Zeichnungen beispielhaft erläutert. Darin zeigen
- Fig. 1: eine stark vereinfachte Schnittdarstellung einer Scheibenbremse, bei der sich die Kraftübertragungselemente in der hinteren Endposition befinden,
- Fig. 2: eine perspektivische Darstellung einiger Bauteile nach Fig. 1,
- Fig. 3: eine Schnittdarstellung des Bremssattels einer Scheibenbremse, wobei sich die Kraftübertragungselemente in ihrer vorderen Endposition befinden,
- Fig. 4: eine perspektivische Darstellung einiger Bauteile nach Fig. 3,
- Fig. 5: eine der in der Scheibenbremse nach den Fign. 1 bis 4 verwendeten Schutzscheiben in einer perspektivischen Einzeldarstellung,
- Fig. 6: in perspektivischer Darstellung zwei Teilscheiben, aus denen die Schutzscheibe nach Fig. 5 zusammengesetzt ist;
- Fig. 7: in Schnittdarstellung ein Kraftübertragungselement mit zugehörigem Dichtelement in beiden Endstellungen;
- Fig.8: in Schnittdarstellung ein anders gestaltetes Kraftübertragungselement mit zugehörigem Dichtelement in seiner am weitesten ausgefahrenen Stellung und
- Fig. 8a: die in Fig. 8 mit VIII bezeichnete Einzelheit in stark vergrößerter Darstellung.

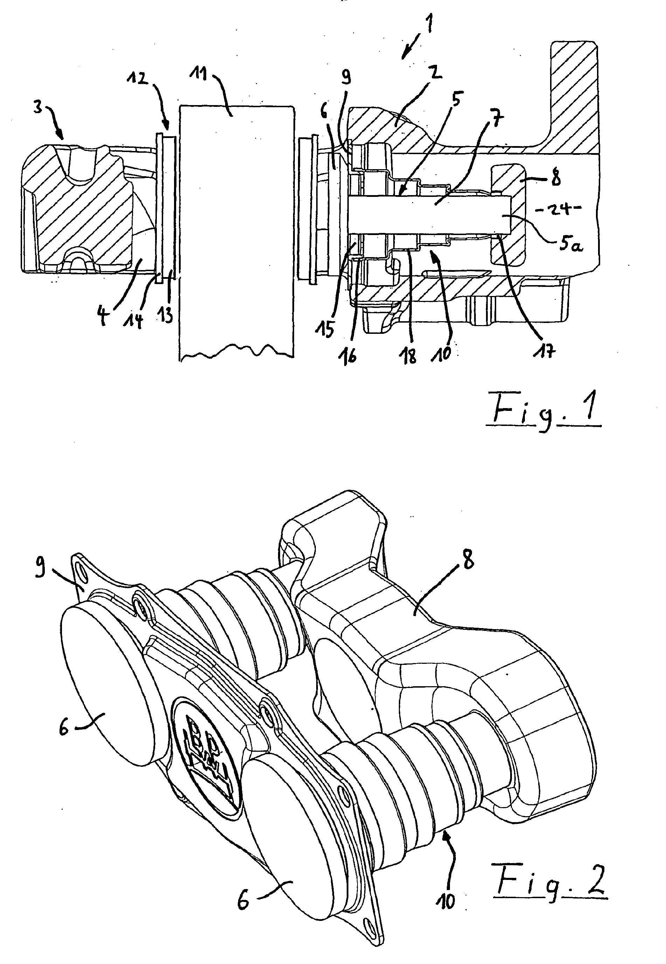

In Fig. 1 ist der Aufbau einer für Fahrzeuge und insbesondere für Schwerlast-Fahrzeuge wie z. B. Lkw-Anhänger bestimmten Scheibenbremse in einer Schnittdarstellung dargestellt. Die Scheibenbremse besteht aus einem Bremssattel 1 sowie einer Bremsscheibe 11, zu deren beiden Seiten Bremsbeläge 12 angeordnet sind, die aus einem Reibbelag 13 sowie einer rückseitigen Belagträgerplatte 14 bestehen.

Wie Fig. 1 weiter erkennen lässt, besteht der Bremssattel 1 aus einer das obere Ende der Bremsscheibe 11 U-förmig umgebenden Bremssattelbrücke 3 sowie einem gegenüber dem Fahrzeug schwimmend gelagerten Gehäuse 2. Im Innern 24 des Gehäuses 2 ist ein Kraftübertragungselement 5 nach Art eines Druckstempels verschiebbar untergebracht. Dieser befindet sich in der Darstellung gemäß Fig. 1 in seiner hinteren Endstellung. Der Druckstempel besteht aus einem Schaft 7 und einem sich in axialer Richtung an den Schaft 7 anschließenden Druckteller 6 größeren Durchmessers. Der Druckteller 6 stützt sich bei Bremsbetätigung gegen den jeweiligen Bremsbelag 12 ab. Am rückwärtigen bzw. bremsscheibenabgewandten Ende 5a des Druckstempels bzw. Kraftübertragungselements 5 befindet sich eine Traverse 8, welche, wie dies auch Fig. 2 zu entnehmen ist, zwei der innerhalb des Bremsgehäuses 2 angeordneten Kraftübertragungselemente 5 miteinander koppelt.

Bei Betätigung der Scheibenbremse werden die Kraftübertragungselemente 5 in Richtung der Bremsscheibe 11 axial aus dem Bremssattelgehäuse 2 hinaus geschoben, um die Bremsbeläge 12 über die Druckteller 6 mit der Bremsscheibe 11 in Anlage zu bringen. Die Kraftübertragungselemente 5 werden dabei rückseitig mittels einer auf der Zeichnung nicht dargestellten Zuspanneinrichtung, die z.B. nach Art einer Schwenkeinrichtung gestaltet ist und im mittleren Bereich der Traverse 8 angreift, mit einer Kraft beaufschlagt und unterstützt durch eine aus reibungsarmem Kunststoff bestehende Scheibe 15 aus dem Bremssattelgehäuse 2 geführt. Die Stellung der Kraftübertragungselemente 5 innerhalb des Bremssattelgehäuses 2 hängt wesentlich vom Verschleiß der Scheibenbremse ab. Mit steigendem Verschleiß werden die Kraftübertragungselemente 5 über eine ebenfalls in dem Bremssattelgehäuse 2 untergebrachte Nachstelleinrichtung in Richtung der Bremsscheibe 11 nachgestellt, so dass sie mit der Zeit immer weiter aus dem Gehäuse 2 austreten.

Zur Bremsscheibe 11 hin ist das Bremssattelgehäuse 2 durch die Scheiben 15 und ferner durch eine Verschlussplatte 9 verschlossen. Um ein Eindringen von feinem Staub oder Feuchte im Bereich der Durchführung der Kraftübertragungselemente 5 in das Innere 24 des Bremssattelgehäuses 2 zu verhindern, ist als Abdichtung jeweils ein streck- und stauchbares Dichtelement 10 in der Form eines Längendifferenzen flexibel aufnehmenden Faltenbalgs vorgesehen. Das Dichtelement 10 besteht, wie Fig. 1 erkennen lässt, aus einem ersten Endbereich 16, einem mittleren Bereich 18 und einem zweiten Endbereich 17. Die Endbereiche 16, 17 sind gegenüber dem übrigen Dichtelement 10 verdickt ausgeführt und einerseits an der Verschlussplatte 9 und damit gegenüber dem Bremssattelgehäuse 2, und andererseits am bremsscheibenabgewandten Ende des Kraftübertragungselements 5 festgelegt. Der mittlere Bereich 18 des Dichtelements 10 ist streck- bzw. stauchbar, so dass sich seine axiale Länge entsprechend der Stellung des Kraftübertragungselements 5 anpassen kann. Insgesamt ist das Dichtelement 10 nach Art eines mehrstufigen, im Ausführungsbeispiel vierstufigen Faltenbalgs gestaltet.

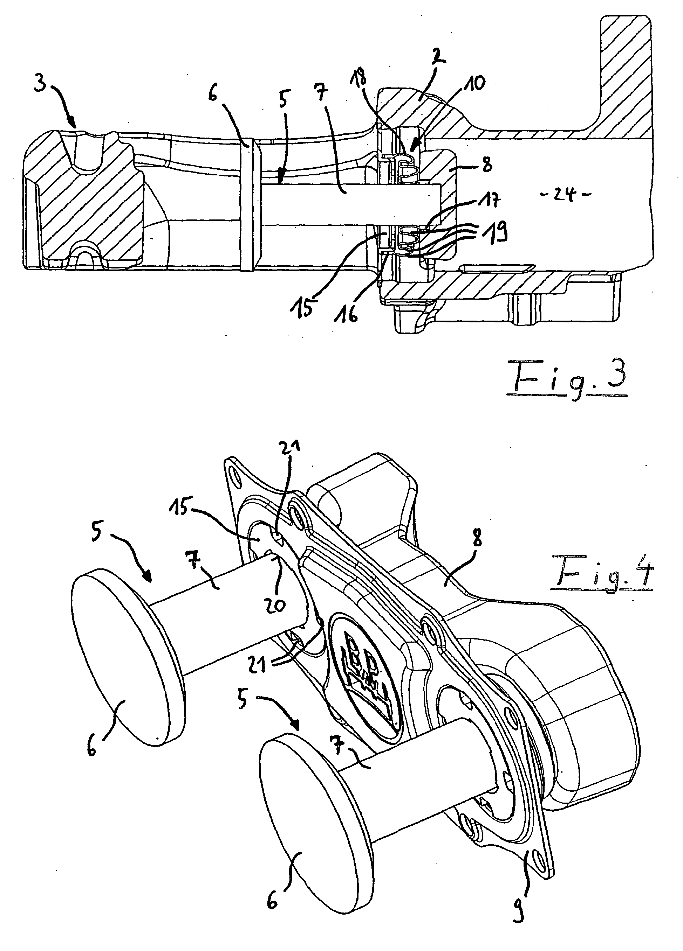

Die Fign. 3 und 4 zeigen Komponenten der erfindungsgemäßen Scheibenbremse nach Fig. 1 in einer zweiten Endposition, in welcher die Kraftübertragungselemente 5 vollständig aus dem Bremssattelgehäuse 2 heraus gefahren sind bzw. die Scheibenbremse ihren maximalen Verschleißzustand erreicht hat, in einer Schnitt- bzw. einer perspektivischen Darstellung. Die Kraftübertragungselemente 5 stehen in dieser zweiten Endposition weit aus dem Bremssattelgehäuse 2 in den Raum zwischen Bremssattelgehäuse 2 und Bremsbelag 12 hervor. Alle in diesem Zwischenraum befindlichen Komponenten der Scheibenbremse sind im Fahrbetrieb Spritzwasser, Steinschlägen usw. ausgesetzt. Wie sich Fig. 3 entnehmen lässt, verbleibt das gegen solche äußeren Einflüsse empfindliche Dichtteil 10 aber selbst in der zweiten Endstellung im Bremssattelgehäuse 2, da der mittlere Bereich 18 des Dichtelements 10 nach Art eines Faltenbalgs in mehreren radial beabstandeten Lagen 19 geschichtet ist. Die Lagen 19 müssen nicht zwingend mit radialem Abstand zueinander angeordnet sein, vielmehr ist es ebenso möglich, dass sich die Lagen 19 bei Stauchung des mittleren Bereichs 18 mit axialem Abstand nebeneinander legen.

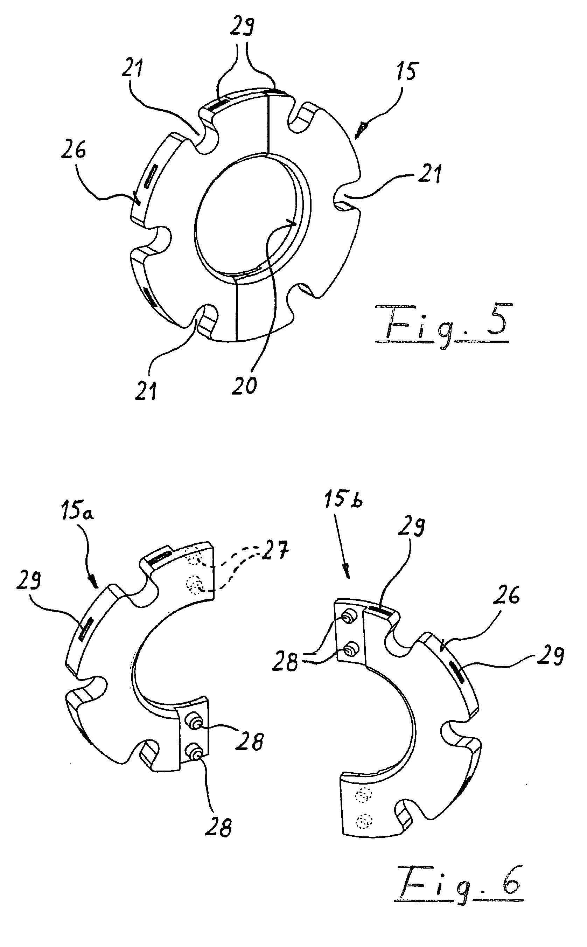

Der Aufbau der das Kraftübertragungselement 5 axial führenden Scheibe 15 lässt sich hinsichtlich der Einbausituation der Fig. 4, und hinsichtlich der Gestaltung im einzelnen den Fign. 5 und 6 entnehmen. Jede der formschlüssig in die Verschlussplatte 9 eingeklemmten Scheiben 15 weist innen Führungsflächen 20 auf, die um das Kraftübertragungselement 5 herum angeordnet sind, und deren Durchmesser ebenso groß oder nur geringfügig größer ist, als der entsprechende Durchmesser des Schafts 7. Die Fig. 4 zeigt eine Ausführung, bei der die Führungsflächen 20 nur segmentweise um den Schaft 7 herum verteilt sind. Demgegenüber ist die Ausführungsform nach den Fign. 5 und 6 insoweit abweichend, als hier die Führungsfläche 20 eine geschlossene Kreisöffnung ist, so dass hier der Schaft 7 auf seinem gesamten Umfang durch die Führungsfläche 20 am Innenrand der Scheibe 15 geführt ist.

Im Bereich Ihres äußeren Randes 26 ist die Scheibe 15 mit mehreren Durchtrittsöffnungen 21 versehen, über die z. B. Feuchtigkeit aus dem von dem Kraftübertragungselement 5 und dem Dichtelement 10 gebildeten Zwischenraum austreten kann. Die Durchtrittsöffnungen 21 sind gleichmäßig über den Umfang der Scheibe verteilt. Ihre Größe ist so gewählt, dass einerseits der Austritt von Feuchtigkeit stets gewährleistet ist, andererseits aber gröbere Partikel wie z. B. kleine Steine nicht in das Innere der Bremse und insbesondere nicht in den Bereich der empfindlichen Abdichtung durch das Dichtelement 10 eindringen können. Des weiteren bildet die Scheibe 15 einen Hitzeschild welcher verhindert, dass die von der Bremsscheibe bzw. den Bremsbelägen 12 ausgehende Strahlungshitze unmittelbar bis in den Bereich der Abdichtung durch das Dichtelement 10 gelangt. Insofern dient die Scheibe 15 daher vorrangig als Schutzscheibe. Darüber hinaus übernimmt die Schutzscheibe 15 die bereits erwähnte Funktion einer Axialführung für das Kraftübertragungselement 5.

Gemäß den Fign. 5 und 6 kann die Schutzscheibe 15 teilbar gestaltet sein. Hierdurch wird erreicht, dass die Scheibe 15 ohne Trennung des Druckstempels 5 von der Traverse 8 und ohne Demontage des Dichtelements 10 auswechselbar ist.

Die Fig. 5 zeigt die zusammengesetzte Schutzscheibe, wohingegen Fig. 6 die beiden voneinander getrennten Teilscheiben 15a, 15b erkennen lässt. Die jeweils einen Halbring bildenden Teilscheiben 15a, 15b sind durch Formschlusselemente 27, 28 lösbar miteinander verbunden. Bei den Formschlusselementen handelt es sich um axial ausgerichtete Sacklöcher 27 bzw. korrespondierende Zapfen 28. Auf diese Weise wird es ermöglicht, dass die Teilscheiben 15a, 15b an ihren Überlappungsbereichen in unterschiedlichen axialen Richtungen voneinander trennbar gestaltet sind, was insbesondere die Demontage der Teilscheiben 15a, 15b erleichtert. Das Trennen der Teilscheiben kann mittels gegenseitigem Verdrehen oder Verkippen leicht ohne Werkzeug von Hand erfolgen.

Vorteilhaft bei den in den Fign. 5 und 6 dargestellten Teilscheiben 15a und 15b ist deren geometrische Gleichheit. Es wird nur ein Herstellwerkzeug bzw. eine Herstellform benötigt.

Wenngleich bei der dargestellten Ausführungsform die Teilscheiben 15a, 15b axial voneinander trennbar sind, ist auch eine radiale Trennbarkeit denkbar.

Um ihre Schutzfunktion auszuüben, können die Teilscheiben 15a, 15b aus Metall bestehen. Bevorzugt wird jedoch die dargestellte Ausführungsform, bei welcher jede Schutzscheibe 15 aus zwei Teilhälften aus thermisch belastbarem Kunststoff besteht, zumal dieser Werkstoff gute Gleiteigenschaften an den Führungsflächen 20 zeigt.

Auf Ihrem Umfang, d. h. auf Ihrem äußeren Rand 26, ist die Schutzscheibe 15 mit Vorsprüngen versehen, die als Schnappelemente 29 dienen. Diese Schnappelemente 29 können in eine entsprechend gestaltete Nut 9a in der Öffnung der Verschlussplatte 9 formschlüssig eingreifen, um so die Schutzscheibe 15 in der Öffnung der Verschlussplatte 9 zu sichern.

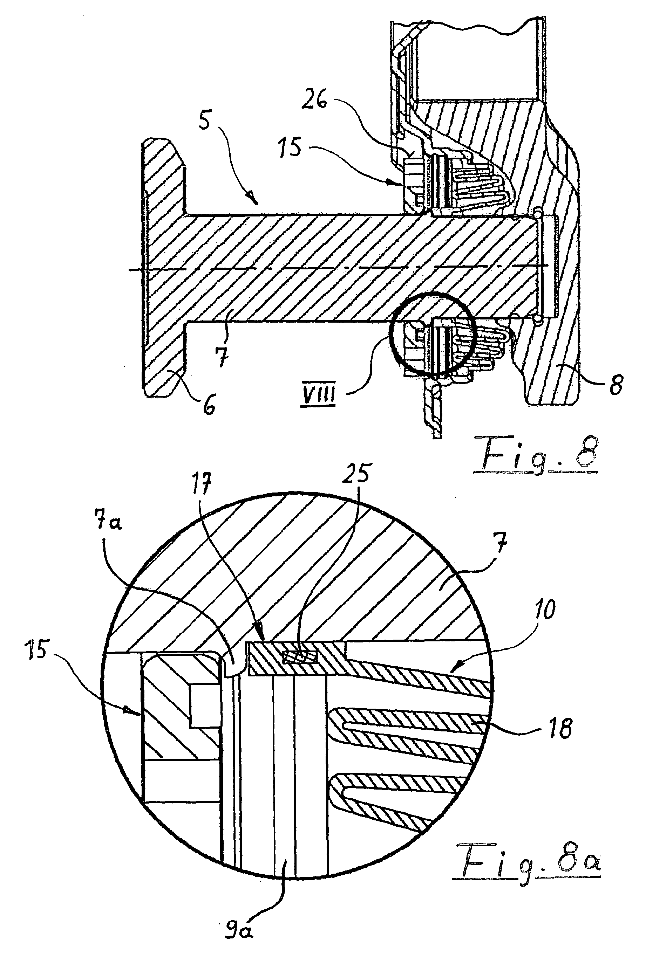

Bei der Ausführungsform nach Fig. 8 wird die Scheibe 15 aus der Verschlussplatte 9 bzw. aus der Nut 9a durch Herausdrücken demontiert. Dies wird mittels eines Demontage- bzw. Hebewerkzeuges bewerkstelligt. Das Werkzeug stützt sich am Gehäuse 2 ab, und greift gleichzeitig durch Schwenken hinter den Druckteller 6 des Druckstempels 5, um so den Druckstempel 5 aus der Traverse 8 zu lösen. Dabei stößt ein Bund 7a des Druckstempels 5 an die Scheibe 15, und nimmt diese in Längsrichtung mit.

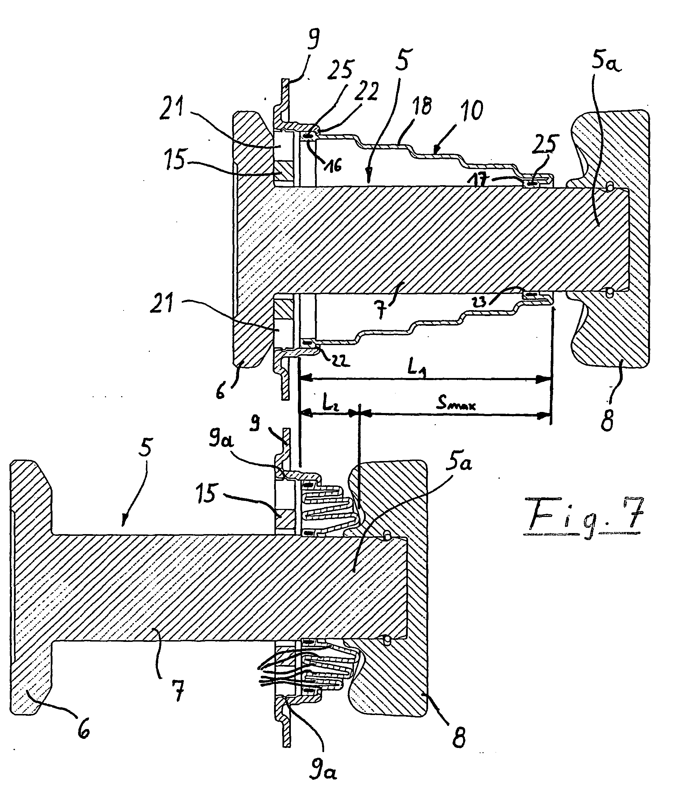

In Fig. 7 sind die beiden Endstellungen des Kraftübertragungselements 5 in einer vergrößerten Schnittdarstellung gegenüber gestellt. In der hinteren Endstellung des Kraftübertragungselements 5 weist das Dichtelement 10 eine axiale Länge L₁ auf. Bei Verschieben der Traverse 8 in Richtung der Bremsscheibe 11 wandert das Kraftübertragungselement 5 vorne aus dem Bremssattelgehäuse 2 hinaus. Dabei erfährt das Dichtelement 10 eine Stauchung S, zugleich wandert das stempelseitige Ende 17 in Richtung zu dem gehäuseseitigen Ende 16. Im unteren Teil von Fig. 7 ist das Kraftübertragungselement 5 in seiner vorderen Endposition, d.h. im Falle maximaler Stauchung Sₘₐₓ = L₁ - L₂ dargestellt. Der mittlere Bereich 18 des Dichtelements 10 ist in dieser Stellung in insgesamt sechs radial voneinander beabstandeten Lagen 19 übereinander geschichtet, weshalb das in der ersten Endposition noch schlauchige Dichtelement 10 eine insgesamt sehr kompakte Gestalt einnimmt. Trotzdem befindet sich das Dichtelement 10 weiterhin geschützt hinter der Scheibe 15.

Die Endbereiche 16, 17 sind beim Ausführungsbeispiel mit einer ringförmigen Metalleinlage 25 verstärkt, um den Sitz des Dichtelements 19 innerhalb der Öffnung der Verschlussplatte 9 bzw. weit hinten auf dem Umfang des Kraftübertragungselements 5 zu verbessern und so eine verbesserte Dichtwirkung zwischen den Endbereichen 16, 17 und den anliegenden Flächen der Verschlußplatte 9 bzw. des Schafts 7 zu erreichen. Das gehäuseseitige Ende 16 klemmt in einer nach hinten gebördelt verlaufenden Öffnung der Verschlussplatte 9 nahe der Außenkante des Bremssattelgehäuses und ist über einen Hinterschnitt 22 gegen axiales Verrutschen gesichert. Das stempelseitige Ende 17 des Dichtelements 10 ist zwischen einem Absatz 23 des Schafts 7 und der Traverse 8 gehalten und so in seiner axialen Position relativ weit hinten auf dem Schaft 7 nahe dessen rückwärtigem Ende 5a gesichert.

Die Ausführung gemäß Fig. 7 ist leicht verschieden zu der gemäß den Fign. 1 bis 4. Das in den Fign. 1 bis 4 dargestellte Dichtelement 10 weist einen mittleren Bereich 18 auf, der sich bei axialer Stauchung zwischen den beiden Endbereichen 16, 17 schichtet (Fig. 3), wodurch eine ungeradzahlige Anzahl Lagen 19 entsteht. Der mittlere Bereich des Dichtelementes 10 gemäß Fig. 7 schichtet sich hingegen auf der bremsscheibenabgewandten Seite der beiden Endbereiche, so dass eine geradzahlige Anzahl von insgesamt sechs Lagen 19 entsteht.

### Bezugszeichen

- 1: Bremssattel
- 2: Gehäuse
- 3: Bremssattelbrücke
- 4: Öffnung
- 5: Kraftübertragungselement, Druckstempel
- 5a: rückwärtiges Ende
- 6: Druckteller
- 7: Schaft
- 7a: Bund
- 8: Traverse
- 9: Verschlussplatte
- 9a: Nut
- 10: Dichtelement
- 11: Bremsscheibe
- 12: Bremsbelag
- 13: Reibbelag
- 14: Belagträgerplatte
- 15: Scheibe, Schutzscheibe
- 15a: Teilscheibe
- 15b: Teilscheibe
- 16: erster Endbereich
- 17: zweiter Endbereich
- 18: mittlerer Bereich
- 19: Lage
- 20: Führungsfläche, Öffnung
- 21: Durchtrittsöffnung
- 22: Hinterschnitt
- 23: Absatz
- 24: Innenraum
- 25: Metalleinlage
- 26: äußerer Rand
- 27: Formschlusselement
- 28: Formschlusselement

- 29: Schnappelement

- S: Stauchung
- L₁: Länge
- L₂: Länge

## Patentansprüche

1. Scheibenbremse für Fahrzeuge, mit einem eine Bremsscheibe (11) übergreifenden Bremssattel (1), in dessen gegenüber äußeren Verunreinigungen abgedichtetem Bremssattelgehäuse (2) ein den Bremsbelag (12) der Scheibenbremse beaufschlagendes Kraftübertragungselement (5) verschiebbar aufgenommen ist, wobei ein Dichtelement (10) mit einem ersten Endbereich (16) gegenüber dem Bremssattelgehäuse (2) und mit einem zweiten Endbereich (17) gegenüber dem Kraftübertragungselement (5) festgelegt ist, das Dichtelement (10) einen axial stauchbaren mittleren Bereich (18) aufweist, der als Faltenbalg ausgebildet ist, und eine Schutzscheibe (15) das Kraftübertragungselement (5) ringförmig umgibt und mit ihrem Außenrand an dem Bremssattelgehäuse (2) festgelegt ist,
**gekennzeichnet durch**
eine derart zwischen dem Bremsbelag (12) und dem Dichtelement (10) angeordnete Schutzscheibe (15), dass sich das ganze Dichtelement (10) hinter der Schutzscheibe (15) befindet.

2. Scheibenbremse nach Anspruch 1, **dadurch gekennzeichnet, dass** die Schutzscheibe (15) aus zwei sich zu einer Ringform ergänzenden Teilscheiben (15a, 15b) zusammengesetzt ist.

3. Scheibenbremse nach Anspruch 2, **dadurch gekennzeichnet, dass** die Teilscheiben (15a, 15b) durch Formschlusselemente (27, 28) lösbar miteinander verbunden sind, und dass die Formschlusselemente (27, 28) in axialer Richtung voneinander trennbar gestaltet sind.

4. Scheibenbremse nach einem der Ansprüche 1 bis 3, **dadurch gekennzeichnet, dass** die Schutzscheibe (15) aus thermisch belastbarem Kunststoff besteht.

5. Scheibenbremse nach einem der Ansprüche 1 bis 4, **dadurch gekennzeichnet, dass** die Schutzscheibe (15) an ihrem Innenrand mit mindestens einer Führungsfläche (20) zur Führung des Kraftübertragungselementes (5) versehen ist.

6. Scheibenbremse nach einem der Ansprüche 1 bis 5, **dadurch gekennzeichnet, dass** der Außenrand (29) der Schutzscheibe (15) durch Schnappelemente (29) in einer Kreisöffnung des Bremssattelgehäuses (2) befestigt ist.

7. Scheibenbremse nach einem der Ansprüche 1 bis 6, **dadurch gekennzeichnet, dass** die Schutzscheibe (15) mit über Ihren Umfang verteilten Durchtrittsöffnungen (21) versehen ist.

8. Scheibenbremse nach Anspruch 7, **dadurch gekennzeichnet, dass** die Durchtrittsöffnungen (21) gleichmäßig über den Umfang der Schutzscheibe (15) verteilt sind.

9. Schutzscheibe (15) zur Verwendung in einer Scheibenbremse, in deren gegenüber äußeren Verunreinigungen abgedichtetem Bremssattelgehäuse ein den Bremsbelag der Scheibenbremse beaufschlagendes Kraftübertragungselement verschiebbar aufgenommen ist, wobei die Schutzscheibe (15) zur Anordnung zwischen dem Bremsbelag und einem sich hinter der Schutzscheibe (15) befindenden Dichtelement (10) ringförmig mit einer zentralen Öffnung (20) für das Kraftübertragungselement und einem an dem Bremssattelgehäuse festlegbarem Außenrand (26) gestaltet ist, und wobei die Schutzscheibe (15) mit über ihren Umfang verteilten Durchtrittsöffnungen (21) versehen ist.

10. Schutzscheibe nach Anspruch 9, **dadurch gekennzeichnet, dass** sie sich aus zwei zur Ringform ergänzenden Teilscheiben (15a, 15b) zusammensetzt.

11. Schutzscheibe nach Anspruch 10, **dadurch gekennzeichnet, dass** die Teilscheiben (15a, 15b) durch Formschlusselemente (27, 28) lösbar miteinander verbunden sind, und dass die Formschlusselemente (27, 28) in axialer Richtung voneinander trennbar gestaltet sind.

12. Schutzscheibe nach einem der Ansprüche 9 bis 11, **dadurch gekennzeichnet, dass** sie aus thermisch belastbarem Kunststoff besteht.

13. Schutzscheibe nach einem der Ansprüche 9 bis 12, **dadurch gekennzeichnet**, das sie an ihrem Innenrand mit mindestens einer Führungsfläche (20) für das Kraftübertragungselement versehen ist.

14. Schutzscheibe nach einem der Ansprüche 9 bis 13, **dadurch gekennzeichnet, dass** sie an ihrem Außenrand (26) mit Befestigungszwecken dienenden Schnappelementen (29) versehen ist.

15. Schutzscheibe nach Anspruch 9, **dadurch gekennzeichnet, dass** die Durchtrittsöffnungen (21) gleichmäßig über den Umfang der Schutzscheibe (15) verteilt sind.

## Claims

1. A disc brake for vehicles, with a brake calliper (1) which engages over a brake disc (11) and in the housing (2) of which sealed off from external contamination a force-transmission element (5) acting upon the pad (12) of the disc brake is received so as to be displaceable, wherein a sealing element (10) is fixed with a first end region (16) opposite the brake calliper housing (2) and with a second end region (17) opposite the force-transmission element (5), the sealing element (10) has a middle region (18) which is axially compressible and which is designed in the form of a folding bellows, and a protection disc (15) surrounds the force-transmission element (5) in an annular manner and is fixed with its outer edge on the brake calliper housing (2), **characterized by** a protection disc (15) arranged between the brake pad (12) and the sealing element (10) in such a way that the entire sealing element (10) is situated behind the protection disc (15).

2. A disc brake according to Claim 1, **characterized in that** the protection disc (15) is formed from two disc parts (15a, 15b) complementing each other to form an annular shape.

3. A disc brake according to Claim 2, **characterized in that** the disc parts (15a, 15b) are connected to each other in a releasable manner by positively locking elements (27, 28), and the positively locking elements (27, 28) are designed to be capable of being separated from one another in the axial direction.

4. A disc brake according to any one of Claims 1 to 3, **characterized in that** the protection disc (15) consists of thermally resistant plastics material.

5. A disc brake according to any one of Claims 1 to 4, **characterized in that** the protection disc (15) is provided on its inner edge with at least one guide face (20) for guiding the force-transmission element (5).

6. A disc brake according to any one of Claims 1 to 5, **characterized in that** the outer edge (29) of the protection disc (15) is fastened in a circular opening in the brake calliper housing (2) by snap elements (29).

7. A disc brake according to any one of Claims 1 to 6, **characterized in that** the protection disc (15) is provided with through-openings (21) distributed over its periphery.

8. A disc brake according to Claim 7, **characterized in that** the through-openings (21) are distributed uniformly over the periphery of the protection disc (15).

9. A protection disc (15) for use in a disc brake, in the brake calliper housing of which sealed off from external contamination a force-transmission element acting upon the pad of the disc brake is received so as to be displaceable, wherein the protection disc (15) is designed in an annular manner with a central opening (20) for the force-transmission element and an outer edge (26) capable of being fastened to the brake calliper housing for arrangement between the brake pad and a sealing element (10) situated behind the protection disc (15), wherein the protection disc (15) is provided with through-openings (21) distributed over its periphery.

10. A protection disc according to Claim 9, **characterized in that** it is formed from two disc parts (15a, 15b) complementing each other to form an annular shape.

11. A protection disc according to Claim 10, **characterized in that** the disc parts (15a, 15b) are connected to each other in a releasable manner by positively locking elements (27, 28), and the positively locking elements (27, 28) are designed to be capable of being separated from one another in the axial direction.

12. A protection disc according to any one of Claims 9 to 11, **characterized in that** it consists of thermally resistant plastics material.

13. A protection disc according to any one of Claims 9 to 12, **characterized in that** it is provided on its inner edge with at least one guide face (20) for guiding the force-transmission element.

14. A protection disc according to any one of Claims 9 to 13, **characterized in that** it is fastened at its outer edge (26) by snap elements (29) used for fastening purposes.

15. A protection disc according to Claim 9, **characterized in that** the through-openings (21) are distributed uniformly over the periphery of the protection disc (15).

## Revendications

1. Frein à disques pour véhicules, comportant un étrier (1) enserrant un disque (11), étrier dont le carter (2), étanche à la pollution extérieure, loge, de manière mobile, un élément de transmission (5) agissant sur la garniture (12) du frein à disques, un élément d'étanchéité (10) étant fixé face au carter d'étrier (2) par une première zone d'extrémité (16) et face à l'élément de transmission (5) par une seconde zone d'extrémité (17), l'élément d'étanchéité (10) présentant une zone centrale (18) pouvant être compressée dans le sens axial, zone qui est réalisée sous forme de soufflet, et un disque de protection (15) entourant l'élément de transmission (5) de manière circulaire et étant fixé au carter d'étrier (2) par son bord externe, **caractérisé par** un disque de protection (15) disposé entre la garniture (12) et l'élément d'étanchéité (10) de telle sorte que l'ensemble de l'élément d'étanchéité (10) se situe derrière le disque de protection (15).

2. Frein à disques selon la revendication 1, **caractérisé en ce que** le disque de protection (15) est constitué de deux parties de disque (15a, 15b) se complétant pour former un anneau.

3. Frein à disque selon la revendication 2, **caractérisé en ce que** les parties de disque (15a, 15b) sont reliées de manière amovible au moyen d'éléments à coopération de formes (27, 28) et **en ce que** les éléments à coopération de forme (27, 28) sont réalisés de manière à pouvoir être séparés dans le sens axial.

4. Frein à disques selon l'une quelconque des revendications 1 à 3, **caractérisé en ce que** le disque de protection (15) est constitué de plastique thermorésistant.

5. Frein à disques selon l'une quelconque des revendications 1 à 4, **caractérisé en ce que** le disque de protection (15) est pourvu, sur son bord interne d'au moins une surface de guidage (20) pour le guidage de l'élément de transmission (5).

6. Frein à disques selon l'une quelconque des revendications 1 à 5, **caractérisé en ce que** le bord externe (29) du disque de protection (15) est fixé par des éléments à déclic (29) dans un orifice circulaire du carter d'étrier (2).

7. Frein à disques selon l'une quelconque des revendications 1 à 6, **caractérisé en ce que** le disque de protection (15) est pourvu d'orifices de passage (21) répartis sur sa circonférence.

8. Frein à disques selon la revendication 7, **caractérisé en ce que** les orifices de passage (21) sont répartis de manière homogène sur la circonférence du disque de protection (15).

9. Disque de protection (15) à utiliser dans un frein à disques dont le carter d'étrier, étanche à la pollution extérieure, loge, de manière mobile, un élément de transmission agissant sur la garniture du frein à disques, le disque de protection (15) étant réalisé, pour être placé entre la garniture et un élément d'étanchéité (10) situé derrière le disque de protection (15), de manière annulaire, avec un orifice central (20) pour l'élément de transmission et un bord externe (26) pouvant être fixé sur le carter d'étrier et le disque de protection (15) étant pourvu d'orifices de passage (21) répartis sur sa circonférence.

10. Disque de protection selon la revendication 9, **caractérisé en ce qu'**il est constitué de deux parties de disque (15a, 15b) se complétant pour former un anneau.

11. Disque de protection selon la revendication 10, **caractérisé en ce que** les parties de disque (15a, 15b) sont reliées de manière amovible par des éléments à coopération de formes (27, 28) et **en ce que** les éléments à coopération de formes (27, 28) sont réalisés de manière à pouvoir être séparés dans le sens axial.

12. Disque de protection selon l'une quelconque des revendications 9 à 11, **caractérisé en ce qu'**il est composé d'un plastique thermorésistant.

13. Disque de protection selon l'une quelconque des revendications 9 à 12, **caractérisé en ce qu'**il est pourvu, sur son bord interne, d'au moins une surface de guidage (20) pour l'élément de transmission.

14. Disque de protection selon l'une quelconque des revendications 9 à 13, **caractérisé en ce qu'**il est pourvu, sur son bord externe (26), d'éléments à déclic (29) servant à la fixation.

15. Disque de protection selon la revendication 9, **caractérisé en ce que** les orifices de passage (21) sont répartis de manière homogène sur la circonférence du disque de protection (15).
